(19) Europäisches Patentamt
European Patent Office
Office européen des brevets

(11) **EP 3 507 407 B1**

(12) **EUROPEAN PATENT SPECIFICATION**

(45) Date of publication and mention
of the grant of the patent:
**15.12.2021 Bulletin 2021/50**

(51) Int Cl.:
*D04H 1/4309* (2012.01)    *A62B 23/02* (2006.01)
*B01D 39/16* (2006.01)    *B01D 46/54* (2006.01)
*D04H 1/4382* (2012.01)    *D04H 1/545* (2012.01)
*D04H 1/558* (2012.01)    *D04H 1/70* (2012.01)
*D21H 13/16* (2006.01)    *D21H 21/52* (2006.01)

(21) Application number: **17785001.3**

(22) Date of filing: **05.09.2017**

(86) International application number:
**PCT/IB2017/055333**

(87) International publication number:
**WO 2018/042403 (08.03.2018 Gazette 2018/10)**

(54) **METHOD FOR PRODUCING A THREEDIMENSIONAL SPONGE BASED ON NANOFIBERS**

VERFAHREN ZUR HERSTELLUNG EINES DREIDIMENSIONALEN SCHWAMMS AUF BASIS VON NANOFASERN

PROCÉDÉ DE PRODUCTION D'UNE ÉPONGE TRIDIMENSIONNELLE À BASE DE NANOFIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2016 CH 11442016**

(43) Date of publication of application:
**10.07.2019 Bulletin 2019/28**

(73) Proprietor: **TB-Safety AG**
**5070 Frick (CH)**

(72) Inventors:
• **ADLHART, Christian**
**8800 Thalwil (CH)**

• **DEUBER, Fabian**
**8820 Wädenswil (CH)**
• **EBERT, Jürgen**
**9500 Wil (CH)**
• **KEEL, Niklaus**
**5078 Effingen (CH)**

(74) Representative: **Laminger, Norbert**
**ABP Patent Network AG**
**Othmarstrasse 8**
**8008 Zürich (CH)**

(56) References cited:
**EP-A1- 1 925 701      EP-A1- 2 377 680**
**WO-A1-2013/158028**

**Description**

FIELD OF THE INVENTION

The invention is related to a method for producing a three-dimensional sponge based on nanofibers.

BACKGROUND OF THE INVENTION

Nanofibers are defined as fibers with a diameter of 1 to 2000 nm. They can be obtained by centrifugal spinning, solution blow spinning, electro-melt-spinning or other production methods. The nanofiber-based materials can be in the form of a continuous yarn, woven or nonwoven yarn, felt, fleece or any other form.

Nanofiber-based materials obtained by electrospinning are intrinsically flat due to their layer by layer manufacturing process. There are different routes to obtain 3D electrospun structures, either by self-assembly, cool drum spinning or gas expansion. However, they lack the possibility of adding scalable pores. Recently, a new class of ultralight truly 3D nanofiber-based aerogels or sponge materials has been developed (see ..Ultralight nanofiber-assembled cellular aerogels with superelasticity and multifunctionality", Yang Si, Jianyong Yu, Xiaomin Tang, Jianlong Ge & Bin Ding in Nat. Commun. 2104, 5, 5802). This work reveals hierarchical pores: minor primary pores between tangled nanofibers, similar to those in electrospun membranes and major cell-like secondary pores.

EP1925701A1 discloses a sponge-like structure or a powder having fibers three-dimensionally arranged therein with high dispersibility, whose apparent density can be designed depending on the purpose or utility, as well as a process producing them. A fiber dispersion in which fibers having a number mean diameter in a predetermined range are dispersed in a dispersion medium, and this fiber dispersion is dried to remove the dispersion medium, thereby, a sponge-like structure and a powder are produced, suitable as a scaffold for a cultivating a cell, specifically, a sponge-like structure which can three-dimensionally hold a cell or a culture medium in the interior thereof, and mimics the environment in a living body surrounding a cell.

OBJECT OF THE INVENTION

It is a major object of the invention to produce a 3D sponge from nanofiber-based material of any form in which the pore sizes are essentially uniform and can be designed with a specific pore size.

SOLUTION OF THE INVENTION

This object is obtained by a method according to the claims.

According to the invention, a three-dimensional sponge based on nanofibers is produced, comprising the processing steps of producing nanofiber-based material, with the nanofibers selected from the group containing Pullulan and/or PVA, suspending the nanofiber-based material into a wetting non-dissolving liquid, chosen from the group containing 1,4-dioxane, with a nanofiber loading of appx. 10 mgml$^{-1}$, with the controlled rate of freezing determined by the freezing-front velocity ($v_f$) of the slurry, with the freezing front velocity ($v_f$) between 2 and 200 $\mu$ms$^{-1}$, homogenizing the suspension to obtain a slurry with separated short nanofibers, with a fiber length smaller than 200 $\mu$m, freezing the slurry at a controlled rate and generating a solid templated three-dimensional network of short nanofibers, and thermally, physically or chemically cross-linking the short nanofibers to improve the mechanical stability of the produced sponge.

The nanofiber-based material is preferably cut into small pieces before suspending into the wetting non-dissolving liquid.

The freezing-front velocity is advantageously chosen by selecting the wetting non-dissolving liquid, the temperature of the slurry, the temperature for solidifying the liquid to solid phase, and the heat transfer to a heat sink by thermal conductivity of the solidified liquid.

The freezing-front velocity may further be controlled by additional heat exchange at the heat sink.

On the other hand, the freezing-front velocity can be controlled from several independent directions by thermal contact between the slurry and heat sinks related to the independent directions and controlled at individual different temperatures.

The freezing-front velocity can also be controlled from several independent directions by intermittently rotating the slurry to induce uniform radial crystal grow.

Preferably suspending the small pieces of nanofiber material is achieved through addition of a wetting agent.

A three-dimensional sponge as produced according to the method as mentioned above is preferably used in a respiratory air cleaning filter.

Further features and advantages of the invention can be obtained from the claims and the following description.

BRIEF DESCRIPTION OF THE DRAWING FIGURES

The invention will now be described in greater detail, by way of example, with reference to the accompanying drawings, in which shows:

Fig. 1 the effect of freezing conditions on the sponge microstructure,

Fig. 2 a diagram of the effect of pressure drop on air face velocity for nanofiber- based sponges,

Fig. 3 a diagram of the particle filtration efficiency of nanofiber-based sponges with a tailored pore size,

Fig. 4 the processing steps for the synthesis of 3D electrospun nanofiber-based sponges by freeze-casting,

Fig. 5 the optimization of the electrospun nanofiber cutting process,

Fig. 6 the dynamic scanning calorimetric graph of the nanofiber slurry in 1,4- dioxane,

Fig. 7 a graph of the estimated freezing-front velocities based on measured temperature profiles,

Fig. 8 FT-IR spectra of different sponges and non-processed polymers,

Fig. 9 SEM images of uniformly distributed Pullulan/PVA nanofibers,

Fig. 10 SEM images of a nanofiber-based sponge with the hierarchical pore structure at different magnification,

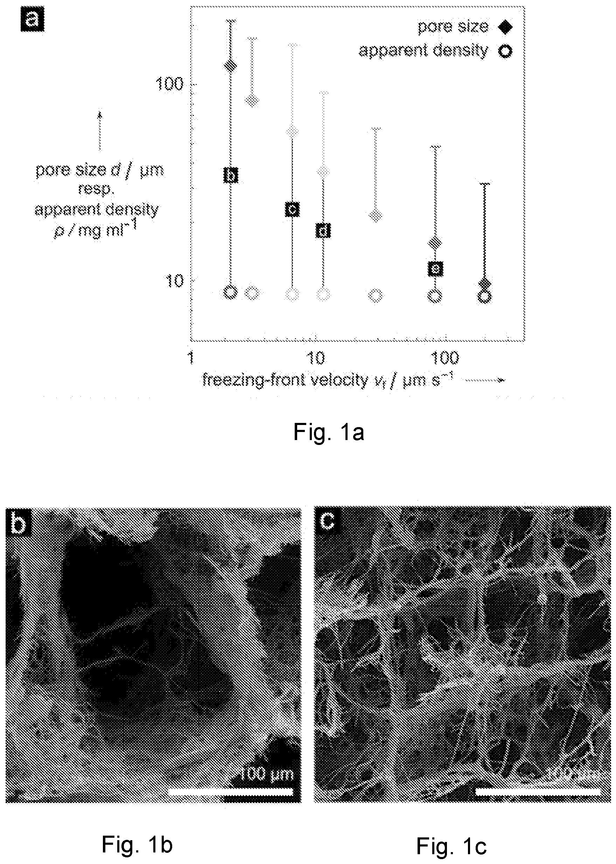

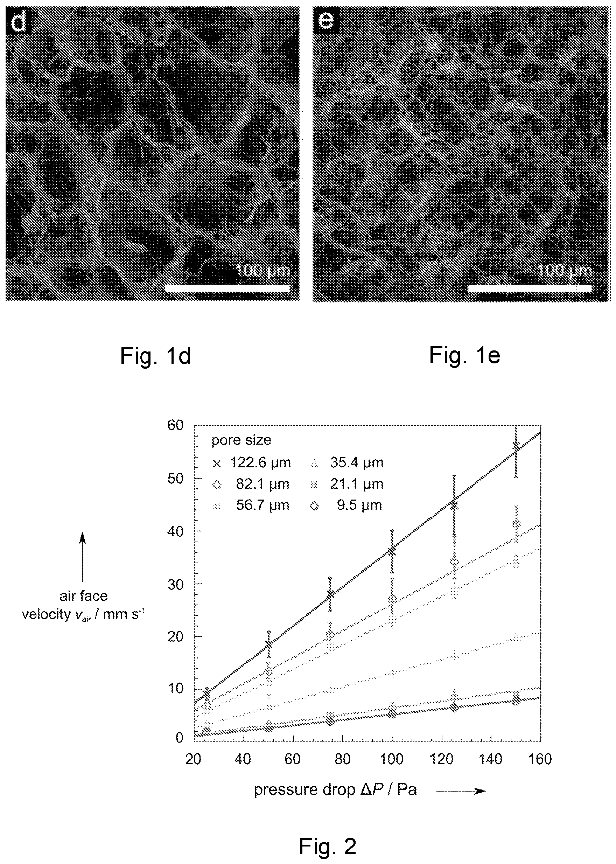

Fig. 1 1 SEM images illustrating the dependence of the hierarchical cellular structure of nanofiber-based sponges on freezing conditions,

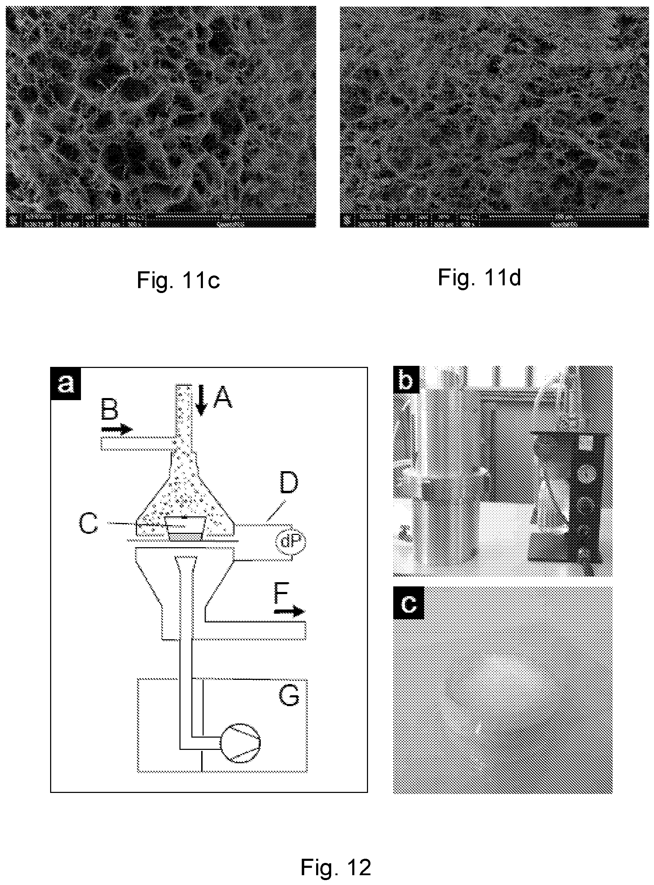

Fig. 12 a scheme for the determination of air filtration efficiency,

Table 1 the apparent density, freezing condition and mechanical properties of sponges composed of short nanofibers obtained by electrospinning, and

Table 2 the physical characteristics of electrospun nanofiber-based sponges.

DETAILED DESCRIPTION OF THE PREFERRED EMBODIMENTS

There is a tremendous effect on the sponges' macroscopic properties from the secondary pores, which is important for potential applications such as tissue scaffolds, catalyst supports, sound absorption or separation material. Fundamental bulk properties, which are governed by the porous microstructure, are on the one hand air permeability and aerosol filtration which is controlled by diffusion within the pores and interaction with the internal surface of the sponge. The method of tuning size and shape of the secondary pores is part of this invention. Basically, nanofibers are cut into short fibers, dispersed in a non-solvent, and the liquid phase is subsequently exchanged with gas by freeze-drying. In this example the nanofibers are produced by electro-melt-spinning, but any other production method like centrifugal spinning, solution blow spinning or other production methods may be used.

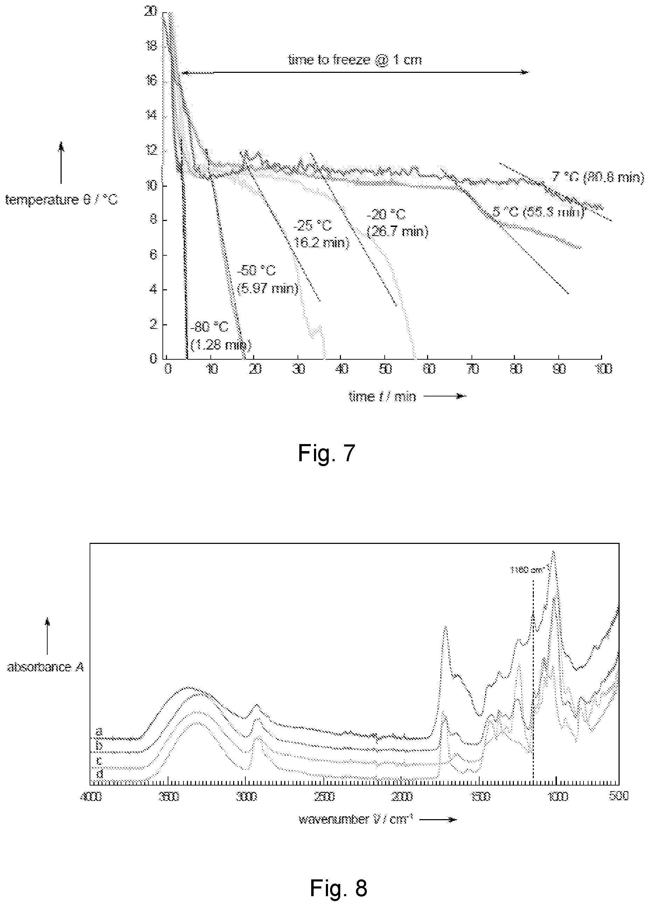

In an example of the producing method, pullulan/PVA blend is selected as the nanofiber raw material for its compatibility with the thermal cross-linking step, its biodegradability and food compatibility. Using free surface electrospinning uniform nanofibers with a diameter of $240 \pm 55$ nm are obtained. To synthesize the sponges, the nanofiber membranes are first homogenized in 1,4-dioxane to provide a suspension, which is subsequently frozen using a directional freezing approach. Sublimation yields the desired raw bodies, which were eventually thermally cross-linked to ensure mechanical stability (see Figure 1). The resulting an ultralight and highly porous fibrous network, with a density between 4 and 19 mgml$^{-1}$ and a porosity up to 99.8 %, has directional pores along the thermal gradient, where the pores replicate the solvent's crystals. The resulting nanofiber-based sponges show a soft compressibility and bendability (compare Table 1). By increasing the freezing-front velocity, $v_f$, from 2 to 200 $\mu$ms$^{-1}$ (see Figure 7), the size of the secondary pores can directly be controlled, decreasing from 123 to 9.5 $\mu$m, respectively, see Figure 1a. The shape of the secondary pores also depends on $v_f$. the large secondary pores reflect the structure of the monoclinic dioxane crystals (see Figures 1b and 1c), while the isotropic distribution of the short nanofibers in the starting suspension is preserved to a larger extent at faster $v_f$, (see Figure 1e). This is obtained by the freezing mechanism for nanoparticle slurries, where the dispersed nanoparticles are rejected by the moving solidification front and thus are concentrated between the growing crystals. It is the velocity of the growing crystals that determines whether particles, in particular fibers, inside the slurry will be rejected and pushed away, or will be trapped and embedded into the growing crystal. The small pores in Figure 1e therefore indicate that the solidification front is faster than the mobility of the fibers. The slower the freezing-front, the more redistribution and rejection of the short fibers is possible, thus resulting in larger pores (see Figure 1b and 1c). This significant difference in the sponges' microstructure is also reflected in the bulk properties of the material. Therefore, microscopic pore size and pore shape of the material govern its macroscopic properties such as gas mass flow as well as aerosol filtration efficiency.

Figure 2 shows the effect of variable pressure drop, $\Delta P$, on the air face velocity, $v_{air}$ for nanofiber-based sponges with identical apparent density but different pore size. Using the Hagen-Poiseuille equation for compressible fluids through porous material, permeability, $K_{air}$ was calculated to be between $1.45 \times 10^{-11}$ m$^2$ for the smallest and $1.02 \times 10^{-10}$ m$^2$ for the largest pores (see Table 2). These values are exceeding those of melt spun of $8.30 \times 10^{-12}$ m$^2$ electrospun of $6.96 \times 10^{-14}$ m$^2$, or ice templated ceramics of $10^{-14}$ m$^2$ to $10^{-11}$ m$^2$ highlighting the potential of nanofiber-based sponges, especially, since the permeability in electrospun nanofiber membranes is mainly controlled by thickness whereas the freezing process in sponge processing adds a second variable to tailor permeability by at least a factor of 7.

Diffusion within the pores and interaction with the nanofiber-based internal surface of the sponges are fundamental processes in aerosol filtration. Moreover, aerosol filtration and in fact every process requiring mass exchange between a stationary and a mobile phase are a compromise between high permeability and high efficiency.

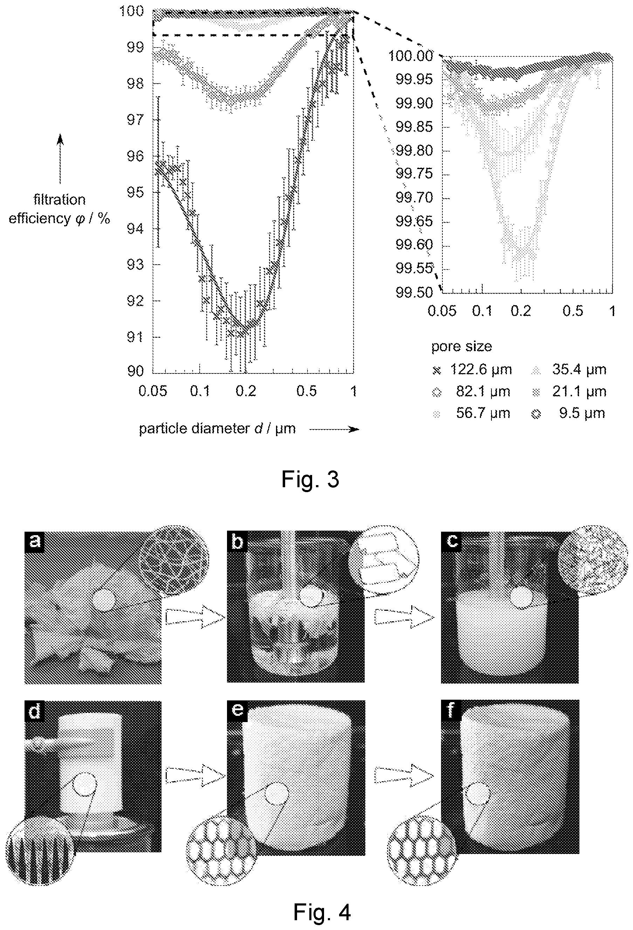

Figure 3 shows the effect of filtration efficiency of nanofiber-based sponges solely depending on the dimension of the secondary pores, while thickness and apparent density of the material were kept constant. Filtration efficiency increased tremendously from 91.22 % for the largest pores to 99.96 % for the smallest pores, meaning a decrease of penetrated aerosol by a factor of 220. However, the most penetrating particle size, MPPS, remained constant within a factor of 1.54 (from 130 to 200 nm). Typical MPPS values for nanofiber-based membranes are < 80 nm. To put nanofiber sponge filters into further context with other (nano)fiber-based filtration materials, a trade-off parameter called quality factor (QF) can be calculated: $QF = -\ln(1 - \varphi)\Delta P$, where $\varphi$ is the filtration efficiency and $\Delta P$ the pressure drop. The present sponge-like filters have a QF between 0.027 and 0.087 Pa$^{-1}$ (see Table 2). QF values are measured for commercially available melt blown membranes (QF = 0.032 Pa$^{-1}$), nanofiber membranes (QF = 0.019 Pa$^{-1}$), and the classical Petrayanov filter (QF = 0.048 Pa$^{-1}$). Other electrospun and melt spun nanofiber filters are in a similar range regarding QF, however when combining electrospun nanofibers with 'nanonetting' the QF can be even as high as 0.25 Pa$^{-1}$. Yet, nanofiber-based sponges may prove a drastically higher dust holding captivity, for they act as deep bed filtration materials.

Processing nanofibers into sponges is almost straightforward. Nanofibers can be processed into ultralight sponges with a hierarchical and tunable pore structure. Primary pores are caused by tangled fibers whereas the larger secondary ones are controlled by the velocity of the solidification front of the freezing liquid and the intrinsic liquid to solid phase transition properties of the dispersing liquid. Secondary pores were tailored between 123 $\mu$m and 9.5 $\mu$m, which is similar to the pore size observed for ceramic based materials (2 $\mu$m to 200 $\mu$m, depending on the system). The tremendous effect of the secondary pore structure can be seen in permeability and filtration efficiency, which varied between a factor of 7 and 220, respectively. The solid templated generation of the nanofiber-based sponges' microstructure allows to efficiently design their macroscopic characteristics. The microstructure of nanofiber-based sponges is a key element for their performance in many applications, whether as scaffold for tissue engineering, as catalyst support, or their use in filtration. Also, materials with anisotropic properties can be produced by directed growth of the solid template crystals.

Experimental basis

Electrospinning

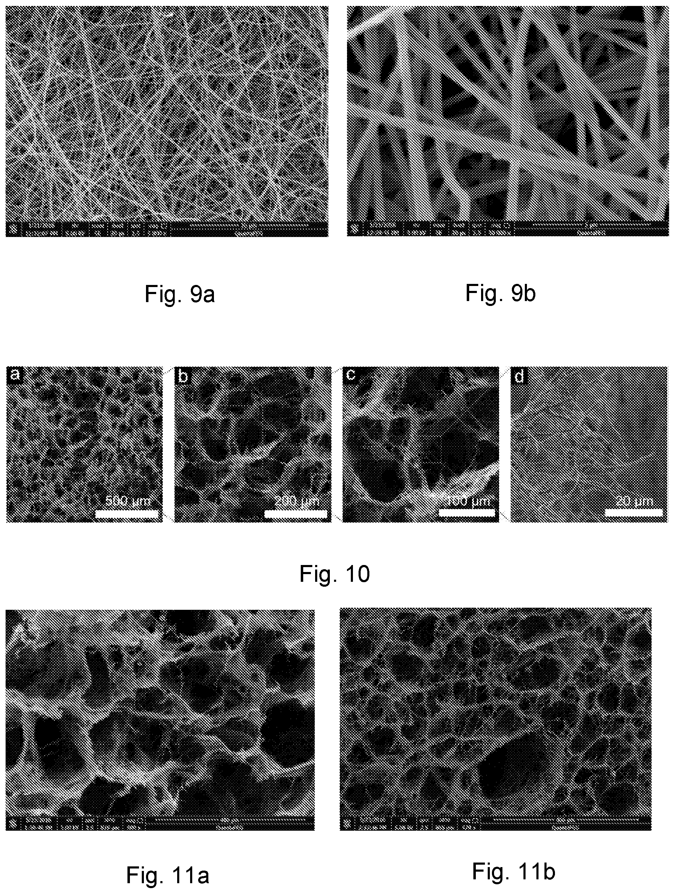

Pullulan/PVA composite nanofibers are prepared by dissolving 6 g Pullulan (food grade, Hayashibara Co. Ltd) and 4 g PVA (Mw = 89000-98000 Da, DH = 99 %, Sigma Aldrich) in 90 g deionized water. Electrospun nanofiber membranes are obtained by free liquid surface electrospinning using a NanospiderTM NS lab 500 (Elmarco s.r.o.). Nanofibers are spun onto baking paper at a high voltage of 80 kV using a cylindrical electrode and a collector distance of 16 cm. Temperature and humidity during electrospinning were 26 $\pm$ 3 °C and 26 $\pm$ 4 %, respectively. Uniform nanofibers with a mean diameter of 240 $\pm$ 55 nm are obtained. Figures 9a and 9b show SEM images of the nanofibers at different magnification.

Processing of electrospun nanofibers into three-dimensional sponges

The processing steps for the synthesis of three-dimensional electrospun nanofiber-based sponges by freeze-casting are cutting electrospun membrane into small pieces of approx. $1 \times 1$ cm$^2$ (Fig. 4a), suspension into a wetting non-dissolving liquid (Fig. 4b), homogenization to obtain a slurry with short electrospun nanofibers (Fig. 4c), freezing the slurry at a controlled rate and generation of the solid templated 3D network of short nanofibers (Fig. 4d), sublimation to obtain the free standing nanofiber sponge (Fig. 4e), and thermally cross-linking to improve the mechanical stability (Fig. 4f).

Homogenization of nanofibers

By using strong shear forces, closely packed membranes are cut into short nanofiber fragments. In a typical experiment for a sponge with a final density of 8.7 mgml$^{-1}$, 3000 mg Pullulan/PVA nanofiber membranes are manually cut into pieces of approx. 1 × 1 cm$^2$, 300 ml of 1,4-dioxane (ACS reagent, >99 %, Sigma Aldrich)

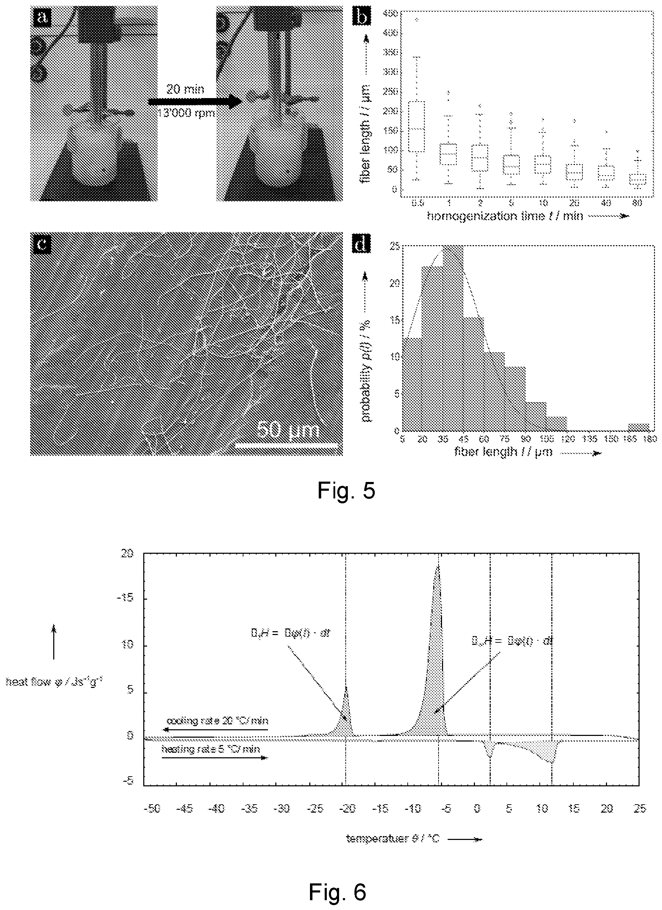

are then added to membrane fragments and the dispersion is then subsequently homogenized using a high-speed homogenizer (IKA T25, S25N-25F, IKA GmbH). Homogenization at 13000 rpm for 20 min yields homogeneously dispersed slurry. Fig. 5a shows the high shear treatment of the nanofiber membranes by the highspeed homogenizer. Fig. 5b shows the dependence of fiber length on homogenization time. Fig. 5c shows a representative SEM image of the nanofiber fragments, and Fig. 5d the histogram after 20 min of homogenization.

Fiber fragment length is controlled by homogenization time (see Fig. 5b). To obtain the same fiber length of approx. 40 pm with an aspect ratio of 120-150, respectively, a homogenization time of 20 min is sufficient.

Freeze-casting of nanofiber dispersions

1,4-dioxane is selected as the dispersing liquid for two reasons: Firstly, 1,4-dioxane enables wetting of the nanofibers and secondly, the slurry has a moderate melting point of 1 1 °C and a relatively high vapor pressure. Further studies of the slurry by DSC showed, that 1,4-dioxane has two crystalline phases: phase I existing between 1 and 1 1 °C and phase II with a transition point to phase I above 1 °C.

In Fig. 7 an estimation of freezing freezing-front velocity, $v_f$ is made within the Pullulan/PVA nanofiber slurry (nanofiber loading of 10 mgml$^{-1}$) based on temperature profiles measured 1 cm from the contact area with the heat sink, which is kept at temperatures between 7 °C and - 80 °C. The doted lines are used to determine the offset of freezing at the height of 1 cm perpendicular to the freezing front. The mean value of $v_f$ was determined by $v_f = h/\Delta t$, where h is the height and $\Delta t$ the time interval between on and offset of the freezing at 1 cm height. The following freezing-front velocities are then determined: 2.06, 3.01, 6.24, 10.89, 27.92, 82.21 $\mu$ms$^{-1}$. The freezing front velocity for slurry frozen with liquid nitrogen (-196 °C, not shown in the graph) was estimated based on the same method. $i_{96}$ °c = 200.8 $\mu$ms$^{-1}$.

The heat of fusion and the specific heat value at the transition point correspond to the known values. Due to metastable conditions during freezing at a rate of 20 °C min$^{-1}$, a shift of freezing and transition point can be observed. To study the influence of freezing conditions on the microstructure of the nanofiber sponge, different freezing experiments are conducted. As illustrated in Figure 8, the mean freezing-front velocity $v_f$ is determined. After freezing at specific freezing conditions, the frozen slurry was dried in a LyoPro 3000 from HETO at < 50 Pa for at least 48 h (depending on the size of the sample). After drying, the sponges were thermally cross-linked at 185 °C for 40 min. IR spectroscopy elucidates the ongoing chemical reaction during crosslinking. Fig. 8 shows the FT-IR spectra of cross-linked (a), non-cross-linked (b) Pullulan/PVA sponges and of the non-processed polymers Pullulan (c) and PVA (d). The spectra are normalized with respect to the OH-absorption band at 3300 cm$^{-1}$ and shifted vertically for the sake of overview. The thermally treated sponge exhibits an isolated band at 1160 cm$^{-1}$ in spectrum (a), which indicates the formation of ether bonds between PVA and Pullulan, under the loss of one molecule of water.

The finally obtained ultralight sponges exhibit a hierarchically ordered pore structure. Fig. 10 depicts SEM images of a nanofiber-based sponge (frozen at 11 $\mu$ms-1, apparent density of 8.6 mgml$^{-1}$) showing the hierarchical pore structure at different magnification. The open pore architecture with secondary pores and primary pores is clearly visible. The fibers appear to be physically and/or chemically merged at their intersections.

Fig. 11 shows SEM images illustrating the dependence of the hierarchical cellular structure of nanofiber-based sponges on freezing conditions: Fig. 11a at a freezing front velocity $v_f$ = 2 ($\mu$ms$^{-1}$, Fig. 11b at $v_f$ = 6 $\mu$ms$^{-1}$, Fig. 11 c at = 11 $\mu$ms$^{-1}$, and Fig. 11 d at $v_f$ = 82 $\mu$ms$^{-1}$. The nanofiber loading in 1,4-dioxane is approx. 10 mg-ml$^{-1}$, thus the apparent densities of the sponges are 8.7 ± 0.1 mgml$^{-1}$

The mechanical properties of the produced sponges under above conditions can be derived from Table 1.

Pore size determination

To determine the mean pore size of the final sponges, the samples are cut perpendicular to the freezing direction at a height of 1 cm. Pores are determined based on SEM images of three cross sections by two different human operators by measuring the length and width of 200 arbitrarily selected pores to obtain a mean pore size. The uncertainty is given as the standard deviation. Fields of view of the SEM images are 800 pm and 400 $\mu$m, respectively.

SEM Images

Cross sections of electrospun nanofiber-based sponges are gold coated (Quorum Q150RS sputter) for 30 s at 20 mA. SEM images of the species are then acquired using a FEI Quantum FEG250 scanning electron microscope, acceleration voltages of 5 kV and the secondary electron detector spot size of 2.5.

Porosity of nanofiber-based sponges

The porosity of the sponges was determined using a standard approach for cellular materials This method is also known as Archimedes principle:

$$\phi = \frac{V_0 - \frac{m}{\rho}}{V_0} \qquad (1)$$

where $\varphi$ is the porosity, $V_0$ is the volume of the sponge, m is the mass and p is the density of the polymeric material. The porosity of a typical sponge with a density of 8.78 mgml$^{-1}$ is then calculated as exemplified: the sponge contains Pullulan (60 wt%, 1.85 g em$^{-3}$) and PVA nanofibers (40 wt%, 1.19 g em$^{-3}$). The porosity, $\varphi$, is then given by $\varphi$ = (1-(0.00878/1.85) 0.6 (0.00878/1.19) 0.4) 100 % = 99.42 %.

Air permeability measurements

Air permeability is determined using the Air Permeability TesterFX 3300 LabAir IV from TEXTest Instruments. Fig. 12a shows a scheme for the determination of air filtration efficiency on the basis of DIN EN 1822-1:2011-01, where A is the aerosol stream, B the mixing flow, C the sample, D the pressure gauge, F the effluent stream and G the particle counter. Fig. 12b is a digital image of the filtration setup and Fig. 12c a digital image of a test sample. From the original mold, which has a diameter of approx. 260 mm, sponges are cut into cylinders with a diameter of 60 mm and a height of 15 mm. The cylinders are taken from the center of the mold to ensure minimal pore gradient. Similar to the ASTM D3574-11, sponges are radially compressed to approx. 90 % of their original area (see Figure 12c). To avoid edge slipping effects all the edges are sealed using regular high vacuum lubricant. All sample are measured in duplicates of duplicates. The air permeability K was calculated according to the Hagen-Poiseuille equation. This equation is valid for a laminar flow under steady-state and it can be used for a compressible fluid through a porous material:

$$K = \frac{v_{air} L \eta}{\Delta P} \qquad (2)$$

where $v_{air}$ is the air face velocity in m s$^{-1}$, L the thickness of the sponges. The investigated pressure drop AP were 25, 50, 75, 100, 125, 150 Pa. Air at 25 °C has dynamic viscosity, $\eta$ of 1.85 10$^{-5}$ Pas. Based on the relatively slow airflow, there is no need to extend the equation with the Forchheimer term, which accounts for inertial effects and ultimately non-linear behavior.

Filtration efficiency and filtration behavior of nanofiber-based sponges

To characterize the filtration behavior of the sponges a similar procedure to the air permeability measurement is chosen. The sponges with a diameter of 6 cm and a height of 1.5 cm are radially compressed (approx. 90 %) and the edges are sealed with high vacuum lubricant. As with the air permeability measurement, only the center of the whole specimen is selected to ensure minimal pore gradient. For all sponges duplicates are prepared and each measurement is duplicated. A certificated aerosol atomizer is used to generate DEHS aerosol with a mass concentration of 29.0 mgm$^{-3}$ or a particle concentration of 2'200'000 Particles cm$^{-3}$, respectively. To analyze the particles size and distribution an ultra-high sensitivity aerosol spectrometer (type UHSAS) from Droplet Measurement Technologies is used. The entire setup for aerosol filtration is constructed and validated by the Incident Response and Individual Protection Branch of Federal Office for Civil Protection, see Figure 12.

Filtration characteristics are determined at an air face velocity, $v_{air}$, of 1.5 cms$^{-1}$ The filtration performance is described as the overall efficiency:

$$\varphi = \frac{(n_{up} - n_{down})}{n_{up}} \qquad (3)$$

where $n_{up}$ is the solid concentration upstream $n_{down}$ the solid concentration downstream. The penetration P is defined by P = 1-$\varphi$. It is expressed in an exponential form:

$$P = \exp\left(\frac{-4\alpha h}{\pi(1-\alpha)D_f}\eta\right) \qquad (4)$$

where $\alpha$ is the filter solidity, h the thickness of the filter, $D_f$ the fiber diameter and $\eta$ the single fiber efficiency. The single filtration efficiency is composed of the diffusion term $\eta_d$, the interception term $\eta_r$ and the impact term $\eta_i$ If a semi empirical correlation of the single fiber efficiency is supposed:

$$\eta_{exp} = 2.6\left(\frac{1-\alpha}{Ku}\right)^{1/3} Pe^{-2/3} + \left(\frac{1-\alpha}{Ku}\right)^{1/3}\frac{R^2}{(1+R)} \qquad (5)$$

K denotes the Kuwabara hydrodynamic factor, Pe the Peclet number Pe = U Dp/D wherein Dp is the particle diameter, U is the interstitial velocity of the filter, and D is the diffusion coefficient of the aerosol particle and R the interception parameter (R = Dp/Df). Based on these models the following equation can be used to fit the obtained data to an experimental filtration curve:

$$\varphi_{exp} = 1 - \exp\left(\frac{-a}{c}\left(b\,x^{2/3} + \frac{\left(\frac{x}{c}\right)^2}{\left(1+\frac{x}{c}\right)}\right)\right) \qquad (6)$$

where a, b and c are fitting parameters which correspond to the theoretical model.

Mechanical properties of nanofiber-based sponges

All compression tests were performed using a TA.XTplus Texture Analyser from Stable Micro Instruments. The system was equipped with a flat compression tool (diameter of 35 mm), calibrated for 100 N. The measured samples had a diameter of approx. 35 mm and an average height of 50 mm. The selected strain rate was 5 mm-s$^{-1}$ and the sponges were compressed to a strain of $\varepsilon$ = 30, 60, and 80 % and a subsequent compression cycle followed the first with a delay of 30 s. For the fatigue test, the sample was compressed with a 100-loading-unloading-cycle at $\varepsilon$ = 30 and 60 %, with a strain rate of 5 mms$^{-1}$.

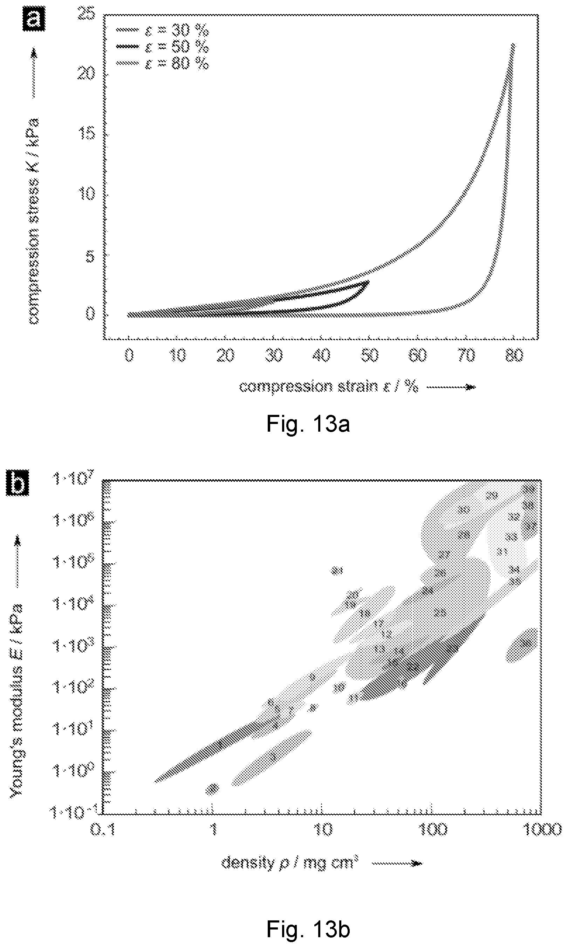

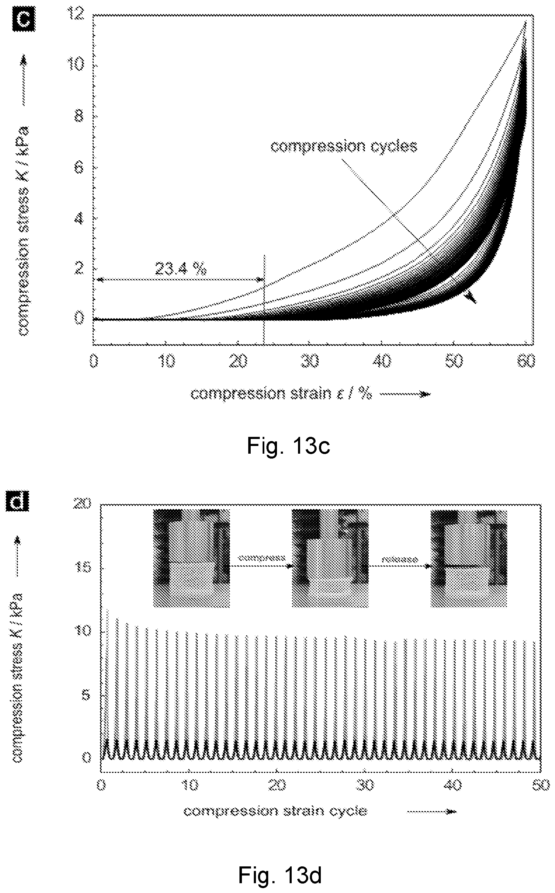

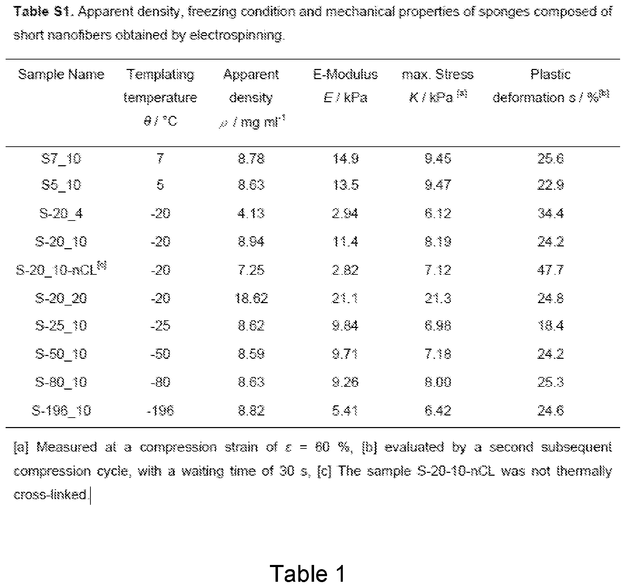

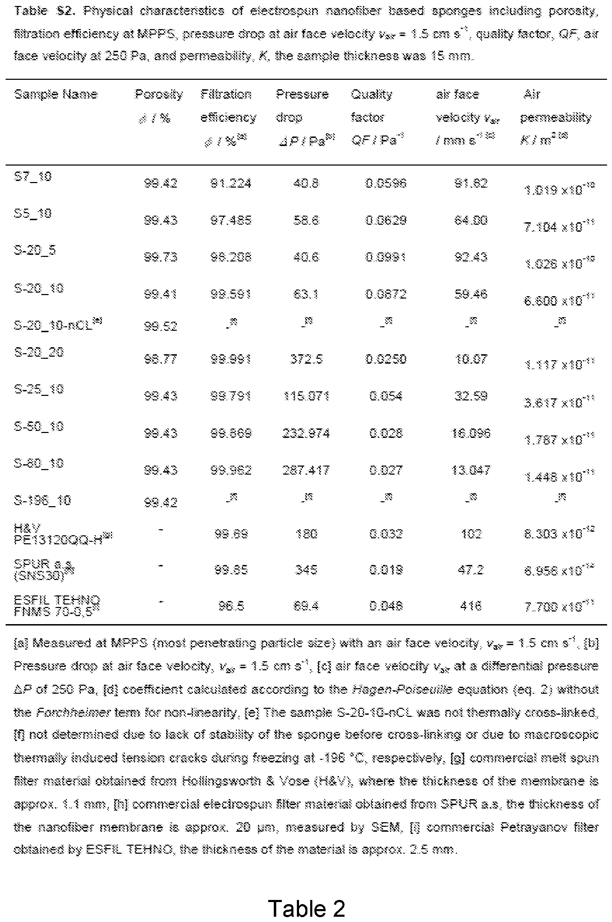

The mechanical properties of a nanofiber-based sponge with apparent density of 8.6 mgml$^{-1}$ frozen at 11 $\mu$ms$^{-1}$ are recorded in the diagrams of Fig. 13. The compression stress K versus compression strain $\varepsilon$ is depicted in Fig. 13a. An overview of an Ashby plot showing Young's modulus E versus density is shown for 1) Ultralight nanofiber sponges, 2) Boron Nitride Aerogel, 3) Ultralight nanofiber sponges, 4) superelastic graphene-based cellular monoliths, 5) Pullulan/PVA nanofiber sponge, 6) Graphene coated Carbon nanotube sponge, 7) Carbon nanotube sponge, 8) superelastic graphene-based cellular monoliths, 9) cellulose aerogel, 10) Graphen assembly, 11) silica aerogels, 12) tannin-based rigid foam, 13) 3D silk aerogel, 14) carbon foam, 15) melamine-formaldehyde rigid foams, 16) Rubber, 17) Propylene foam DOW Chemicals, 18) Polysterene foam, 19) Polysterene foam Styropor BASF, 20) Polyimide foams, 21 ) Aramid fibers, 22) sorcinol-formaldehyde aerogels, 23) Epoxyboroxine foam, 24) PVC foam, 25) Polyurethane foams, 26) stiff polyurethane foams, 27) bio-based macroporous foam, 28) natural materials, 29) wood, 30) Siliciumdioxide aerogel, 31 ) general polymers, 32) Polyacetat, 33) Polyamide, 34) Polyester, 35) Siliconoxycarbide Ceramic Foams, 36) silica rubber, 37) Polyphenol-formaldehyd resin, 38) Aluminium foam, 39) 3D printed ceramic scaffold. In Fig. 13c a 100-cycle fatigue test at a compression strain $\varepsilon$ = 60 % is depicted, where the plastic deformation is 23.4 %. Fig. 13d shows a comparison of the fatigue compression for a $\varepsilon$ = 60 % (grey) and $\varepsilon$ = 30 % (black). At a strain of $\varepsilon$ = 30 % almost no plastic deformation can be observed (see insets).

Differential scanning calorimetry (DSC)

Differential scanning calorimetry (DSC 1 ,STARe Systems, Mettler Toledo) is used to obtain the phase transitions of the nanofiber slurry in 1,4-dioxane. The short nanofiber slurry (loading of 10 mgml$^{-1}$) is sealed in an aluminum standard pan (40 $\mu$l) and cooled from 25 to -50 °C at a cooling rate of 20 °C min$^{-1}$. The temperature of -50 °C is kept for 7.5 min, and subsequently heated to 50 °C, with a rate of 5 °C min$^{-1}$. The N$_2$ flow during the entire measurement cycle is 20 mlmin$^{-1}$.

FTIR Spectroscopy

All IR experiments were performed on Bruker Tensor 37 instrument which was equipped with a diamond ATR (Specac Golden Gate MkII) unit. All spectra were collected in the range between 600 and 4000 cm$^{-1}$, with a resolution of 4 cm$^{-1}$. The spectra were recorded at room temperature.

Determination of fiber diameter

The fiber diameter is estimated based on the SEM picture of the electrospun nanofibers before homogenization. Each fiber is only measured once to reduce the bias for bigger fibers. According to the recommended magnification and rules for fiber diameter determination a field of view of 3 $\mu$m was selected.

**Claims**

1. Method for producing a three-dimensional sponge based on nanofibers comprising following processing steps:

    a) producing nanofiber-based material, with the nanofibers selected from the group containing blends of Pullulan and PVA,
    b) suspending the nanofiber-based material into a wetting non-dissolving liquid, chosen from the group containing 1,4-dioxane, with a nanofiber loading of appx. 10 mgml$^{-1}$
    c) homogenizing the suspension to obtain a slurry with separated short nanofibers, with a fiber length smaller than 200 $\mu$m,
    d) freezing the slurry at a controlled rate and generating a solid templated 3D network of short nanofibers, with the controlled rate of freezing determined by the freezing-front velocity ($v_f$) of the slurry, with the freezing front velocity ($v_f$) between 2 and 200 $\mu$ms$^{-1}$, and
    e) thermally, physically or chemically cross-linking the short nanofibers to improve the mechanical stability of the produced sponge.

2. Method according to claim 1, wherein the nanofiber-based material is cut into small pieces before step b) of suspending into the wetting non-dissolving liquid.

3. Method according to claim 1, wherein the freezing-front velocity ($v_f$) is chosen by selecting the wetting non-dissolving liquid, the temperature of the slurry, the temperature for solidifying the liquid to solid phase, and the heat transfer to a heat sink by thermal conductivity of the solidified liquid.

4. Method according to claim 3, wherein the freezing-front velocity ($v_f$) is controlled by additional heat exchange at the heat sink.

5. Method according to claim 4, wherein the freezing-front velocity ($v_f$) is controlled from several independent directions by thermal contact between the slurry and heat sinks related to the independent directions and controlled at individual different temperatures.

6. Method according to claim 5, wherein the freezing-front velocity ($v_f$) is controlled from several independent directions by intermittently rotating the slurry to induce uniform radial crystal grow.

7. Method according to any of claims 1 to 6, wherein in step b) wetting is achieved through addition of a wetting agent.

8. Method according to any of claims 1 to 7, wherein the suspension is homogenized for a time between 1 and 100 minutes.

9. Method according to any of claims 1 to 8, wherein the suspension is homogenized to obtain a slurry with separated short nanofibers with a mean fiber length between 20 μm and 60 μm.

**Patentansprüche**

1. Verfahren zur Herstellung eines dreidimensionalen Schwamms auf Basis von Nanofasern, umfassend die folgenden Bearbeitungsschritte:

   a) Herstellen eines Nanofaser-Werkstoffs, wobei die Nanofasern aus der Gruppe ausgewählt werden, die Mischungen aus Pullulan und PVA enthält,
   b) Suspendieren des Nanofaser-Werkstoffs in einer benetzenden, nicht lösenden Flüssigkeit, ausgewählt aus der Gruppe, die 1,4-Dioxan enthält, mit einem Nanofaser-Gehalt von ca. 10 mgml-1 enthält,
   c) Homogenisieren der Suspension, um eine Aufschlämmung mit getrennten, kurzen Nanofasern zu erhalten, deren Faserlänge kleiner als 200 μm ist,
   d) Einfrieren der Aufschlämmung mit kontrollierter Rate und Erzeugen eines festen dreidimensionalen Template-Netzwerks aus kurzen Nanofasern, wobei die kontrollierte Rate des Gefrierens durch die Geschwindigkeit der Gefrierfront (vf) der Aufschlämmung bestimmt wird, wobei die Geschwindigkeit der Gefrierfront (vf) zwischen 2 und 200 μms-1 beträgt und
   e) thermisches, physisches oder chemisches Vernetzen der kurzen Nanofasern, um die mechanische Stabilität des hergestellten Schwamms zu verbessern.

2. Verfahren nach Anspruch 1, wobei der Nanofaser-Werkstoff vor Schritt b) des Suspendierens in der benetzenden, nicht lösenden Flüssigkeit in kleine Stücke geschnitten wird.

3. Verfahren nach Anspruch 1, wobei die Geschwindigkeit der Gefrierfront (vf) durch Auswahl der benetzenden, nicht lösenden Flüssigkeit, der Temperatur der Aufschlämmung, der Temperatur zum Verfestigen der Flüssigkeit in den festen Zustand, und des Wärmetransfers zu einer Wärmesenke durch die Wärmeleitfähigkeit der verfestigten Flüssigkeit gewählt wird.

4. Verfahren nach Anspruch 3, wobei die Geschwindigkeit der Gefrierfront (vf) durch einen zusätzlichen Wärmeaustausch an der Wärmesenke gesteuert wird.

5. Verfahren nach Anspruch 4, wobei die Steuerung der Geschwindigkeit der Gefrierfront (vf) aus mehreren, unabhängigen Richtungen durch thermischen Kontakt zwischen der Aufschlämmung und den unabhängigen Richtungen zugehörigen und mit individuellen, unterschiedlichen Temperaturen gesteuerten Wärmesenken stattfindet.

6. Verfahren nach Anspruch 5, wobei die Steuerung der Geschwindigkeit der Gefrierfront (vf) aus mehreren, unabhängigen Richtungen durch intermittierendes Rotieren der Aufschlämmung zum Hervorrufen von einheitlichem radialem Kristallwachstum stattfindet.

7. Verfahren nach einem der Ansprüche 1 bis 6, wobei das Benetzen in Schritt b) durch Hinzufügen eines Benetzungsmittels erreicht wird.

8. Verfahren nach einem der Ansprüche 1 bis 7, wobei die Suspension über eine Dauer zwischen 1 und 100 Minuten homogenisiert wird.

9. Verfahren nach einem der Ansprüche 1 bis 8, wobei die Suspension homogenisiert wird, um eine Aufschlämmung mit getrennten kurzen Nanofasern mit einer mittleren Faserlänge von 20 μm bis 60 μm zu erhalten.

**Revendications**

1. Procédé de production d'une éponge tridimensionnelle à base de nanofibres comprenant les étapes de traitement suivantes :

   a) produire un matériau à base de nanofibres, avec les nanofibres choisies dans le groupe contenant des mélanges de pullulane et de PVA,

b) mettre en suspension le matériau à base de nanofibres dans un liquide de mouillage non dissolvant, choisi dans le groupe comprenant 1,4-dioxane, avec une charge de nanofibres d'environ 10 mg/ml-1.

c) homogénéiser la suspension pour obtenir une suspension épaisse avec des nanofibres courtes séparées, avec une longueur de fibre inférieure à 200 $\mu$m,

d) congeler la suspension épaisse à une vitesse commandée et générer un réseau 3D à matrice solide de nanofibres courtes, la vitesse régulée de congélation étant déterminée par la vitesse de front de congélation (vf) de la suspension épaisse, la vitesse de front de congélation (vf) étant comprise entre 2 et 200 $\mu$ms-1, et

e) réticuler thermiquement, physiquement ou chimiquement les nanofibres courtes afin d'améliorer la stabilité mécanique de l'éponge produite.

2. Procédé selon la revendication 1, dans lequel le matériau à base de nanofibres est découpé en petits morceaux avant l'étape b) de mise en suspension dans le liquide de mouillage non dissolvant.

3. Procédé selon la revendication 1, dans lequel la vitesse de front de congélation (vf) est choisie en sélectionnant le liquide de mouillage non dissolvant, la température de la suspension épaisse, la température pour solidifier le liquide en phase solide, et le transfert de chaleur à un dissipateur de chaleur par conductivité thermique du liquide solidifié.

4. Procédé selon la revendication 3, dans lequel la vitesse de front de congélation (vf) est commandée par un échange de chaleur supplémentaire au niveau du dissipateur de chaleur.

5. Procédé selon la revendication 4, dans lequel la vitesse de front de congélation (vf) est commandée à partir de plusieurs directions indépendantes par un contact thermique entre la suspension épaisse et les dissipateurs de chaleur en relation avec les directions indépendantes et commandée à différentes températures individuelles.

6. Procédé selon la revendication 5, dans lequel la vitesse de front de congélation (vf) est commandée à partir de plusieurs directions indépendantes en faisant tourner de manière intermittente la suspension épaisse pour induire une croissance radiale uniforme de cristaux.

7. Procédé selon l'une quelconque des revendications 1 à 6, dans lequel à l'étape b), le mouillage est réalisé par addition d'un agent de mouillage.

8. Procédé selon l'une quelconque des revendications 1 à 7, dans lequel la suspension est homogénéisée pendant un temps compris entre 1 et 100 minutes.

9. Procédé selon l'une quelconque des revendications 1 à 8, dans lequel la suspension est homogénéisée pour obtenir une suspension épaisse avec des nanofibres courtes séparées avec une longueur de fibre moyenne comprise entre 20 $\mu$m et 60 $\mu$m.

Fig. 1a

Fig. 1b

Fig. 1c

Fig. 1d

Fig. 1e

Fig. 2

Fig. 3

Fig. 4

Fig. 5

Fig. 6

Fig. 7

Fig. 8

Fig. 9a

Fig. 9b

Fig. 10

Fig. 11a

Fig. 11b

EP 3 507 407 B1

Fig. 11c

Fig. 11d

Fig. 12

Fig. 13a

Fig. 13b

Fig. 13c

Fig. 13d

**Table S1.** Apparent density, freezing condition and mechanical properties of sponges composed of short nanofibers obtained by electrospinning.

| Sample Name | Templating temperature $\theta$ / °C | Apparent density $\rho$ / mg ml$^{-1}$ | E-Modulus $E$ / kPa | max. Stress $K$ / kPa [a] | Plastic deformation $s$ / % [b] |
|---|---|---|---|---|---|
| S7_10 | 7 | 8.78 | 14.9 | 9.45 | 25.6 |
| S5_10 | 5 | 8.63 | 13.5 | 9.47 | 22.9 |
| S-20_4 | -20 | 4.13 | 2.94 | 6.12 | 34.4 |
| S-20_10 | -20 | 8.94 | 11.4 | 8.19 | 24.2 |
| S-20_10-nCL [c] | -20 | 7.25 | 2.82 | 7.12 | 47.7 |
| S-20_20 | -20 | 18.62 | 21.1 | 21.3 | 24.8 |
| S-25_10 | -25 | 8.82 | 9.84 | 6.98 | 18.4 |
| S-50_10 | -50 | 8.59 | 9.71 | 7.18 | 24.2 |
| S-80_10 | -80 | 8.63 | 9.26 | 8.00 | 25.3 |
| S-196_10 | -196 | 8.82 | 5.41 | 6.42 | 24.6 |

[a] Measured at a compression strain of $\varepsilon$ = 60 %, [b] evaluated by a second subsequent compression cycle, with a waiting time of 30 s, [c] The sample S-20-10-nCL was not thermally cross-linked.

# Table 1

Table S2. Physical characteristics of electrospun nanofiber based sponges including porosity, filtration efficiency at MPPS, pressure drop at air face velocity $v_{air}$ = 1.5 cm s⁻¹, quality factor, QF, air face velocity at 250 Pa, and permeability, K, the sample thickness was 15 mm.

| Sample Name | Porosity ε / % | Filtration efficiency ε / %[a] | Pressure drop ΔP / Pa[b] | Quality factor QF / Pa⁻¹ | air face velocity $v_{air}$ / mm s⁻¹[c] | Air permeability K / m²[d] |
|---|---|---|---|---|---|---|
| S7_10 | 99.42 | 91.224 | 40.8 | 0.0596 | 91.62 | $1.019 \times 10^{-10}$ |
| S5_10 | 99.43 | 97.485 | 58.6 | 0.0629 | 64.00 | $7.104 \times 10^{-11}$ |
| S-20_5 | 99.73 | 98.208 | 40.6 | 0.0991 | 92.43 | $1.026 \times 10^{-10}$ |
| S-20_10 | 99.41 | 99.591 | 63.1 | 0.0872 | 59.46 | $6.600 \times 10^{-11}$ |
| S-20_10-nCL[e] | 99.52 | -[f] | -[f] | -[f] | -[f] | -[f] |
| S-20_20 | 98.77 | 99.991 | 372.5 | 0.0250 | 10.07 | $1.117 \times 10^{-11}$ |
| S-25_10 | 99.43 | 99.791 | 115.071 | 0.054 | 32.59 | $3.617 \times 10^{-11}$ |
| S-50_10 | 99.43 | 99.869 | 232.974 | 0.028 | 16.096 | $1.787 \times 10^{-11}$ |
| S-80_10 | 99.43 | 99.962 | 287.417 | 0.027 | 13.047 | $1.448 \times 10^{-11}$ |
| S-196_10 | 99.42 | -[f] | -[f] | -[f] | -[f] | -[f] |
| H&V PE13120QQ-H[g] | - | 99.89 | 180 | 0.032 | 102 | $8.303 \times 10^{-12}$ |
| SPUR a.s. (SNS30)[h] | - | 99.85 | 345 | 0.019 | 47.2 | $6.956 \times 10^{-14}$ |
| ESFIL TEHNO FNMS 70-0,5[i] | - | 96.5 | 69.4 | 0.048 | 416 | $7.700 \times 10^{-11}$ |

[a] Measured at MPPS (most penetrating particle size) with an air face velocity, $v_{air}$ = 1.5 cm s⁻¹, [b] Pressure drop at air face velocity, $v_{air}$ = 1.5 cm s⁻¹, [c] air face velocity $v_{air}$ at a differential pressure ΔP of 250 Pa, [d] coefficient calculated according to the *Hagen-Poiseuille* equation (eq. 2) without the *Forchheimer* term for non-linearity, [e] The sample S-20-10-nCL was not thermally cross-linked, [f] not determined due to lack of stability of the sponge before cross-linking or due to macroscopic thermally induced tension cracks during freezing at -196 °C, respectively, [g] commercial melt spun filter material obtained from Hollingsworth & Vose (H&V), where the thickness of the membrane is approx. 1.1 mm, [h] commercial electrospun filter material obtained from SPUR a.s, the thickness of the nanofiber membrane is approx. 20 µm, measured by SEM, [i] commercial Petrayanov filter obtained by ESFIL TEHNO, the thickness of the material is approx. 2.5 mm.

Table 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1925701 A1


**Non-patent literature cited in the description**

• **YANG SI ; JIANYONG YU ; XIAOMIN TANG ; JIAN-LONG GE ; BIN DING.** Ultralight nanofiber-assembled cellular aerogels with superelasticity and multifunctionality. *Nat. Commun.,* vol. 2104 (5), 5802